(19) Europäisches Patentamt
European Patent Office
Office européen des brevets

(11) **EP 2 002 204 B1**

(12) **EUROPÄISCHE PATENTSCHRIFT**

(45) Veröffentlichungstag und Bekanntmachung des Hinweises auf die Patenterteilung:
**22.02.2012 Patentblatt 2012/08**

(21) Anmeldenummer: **07723569.5**

(22) Anmeldetag: **24.03.2007**

(51) Int Cl.:
**G01B 11/30** (2006.01)   **G01B 11/27** (2006.01)

(86) Internationale Anmeldenummer:
**PCT/EP2007/002622**

(87) Internationale Veröffentlichungsnummer:
**WO 2007/112872 (11.10.2007 Gazette 2007/41)**

(54) **VERFAHREN UND VORRICHTUNG ZUR BESTIMMUNG UND VERMESSUNG VON FORMABWEICHUNGEN UND WELLIGKEITEN AN ROTATIONSSYMMETRISCHEN TEILEN**

METHOD AND APPARATUS FOR DETERMINING AND GAUGING DEVIATIONS IN SHAPE AND WAVINESS OF ROTATIONALLY SYMMETRICAL PARTS

PROCEDE ET DISPOSITIF DE DETERMINATION ET DE MESURE D'ECARTS DE FORME ET D'ONDULATIONS SUR DES PIECES A SYMETRIE DE ROTATION

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **31.03.2006 DE 102006015627**

(43) Veröffentlichungstag der Anmeldung:
**17.12.2008 Patentblatt 2008/51**

(73) Patentinhaber: **Innovent e.V.**
**07745 Jena (DE)**

(72) Erfinder:
• **HERTZSCH, Albrecht**
**07745 Jena (DE)**
• **KRÖGER. Knut**
**07745 Jena (DE)**

(74) Vertreter: **Pfeiffer, Rolf-Gerd**
**Patentanwaltsbüro**
**Pfeiffer & Kollegen**
**Engelplatz 11**
**07743 Jena (DE)**

(56) Entgegenhaltungen:
EP-A- 0 628 787    EP-A2- 0 068 082
DE-A1- 3 827 752    DE-A1- 4 408 226
JP-A- 57 161 610    US-A- 4 490 618
US-A- 4 859 062    US-A- 5 926 781

**Beschreibung**

Die Erfindung betrifft ein Verfahren und eine Vorrichtung zur Bestimmung und Vermessung von Formabweichungen und Welligkeiten an rotationssymmetrischen technischen Oberflächen in Umfangsrichtung, die mit geringem Messaufwand und hoher Stabilität gegenüber störenden Umwelteinflüssen schnell Formabweichungen und Welligkeiten quantitativ erfassen und bewerten.

Rotationssymmetrische Flächen (z.B. beim Zylinder oder der Kugel) werden technisch zumeist als statische oder dynamische Dichtflächen oder als Gleit- oder Rollflächen eingesetzt. Gestaltabweichungen 1. und 2. Ordnung (Formabweichung und Welligkeit) wirken sich somit besonders nachteilig auf das funktionale Verhalten dieser Flächen aus. Folglich gelten für rotationssymmetrische Werkstücke besonders hohe Qualitätskriterien bezüglich Formabweichung und Welligkeit.

Formabweichungen bei spanenden Bearbeitungsverfahren resultieren zumeist aus der elastischen Verformung der Bearbeitungseinheit (Werkzeug, Werkzeughalter etc.), der elastischen Verformung des Werkstücks oder Führungsbahnfehlern des Werkzeugs oder Werkstücks während der Bearbeitung. Welligkeiten werden hervorgerufen durch Schwingungen des Werkzeugs oder Werkstücks beim Spanabtrag. Der Einfluss dieser Störgrößen auf die Gestaltabweichungen 1. und 2. Ordnung hängt in komplexer Weise von einer Reihe technologischer Parameter des Bearbeitungsprozesses ab (z.B. den Schnittbedingungen beim Spanabtrag, dem Werkstückmaterial, usw.). Um die Oberflächenfunktion des bearbeiteten Werkstücks zu bewerten und eine Analyse des Bearbeitungsprozesses zu ermöglichen, ist eine schnelle Messung dieser Gestaltabweichungen wünschenswert.

Formabweichungen sowie Welligkeiten rotationssymmetrischer Flächen werden nach dem Stand der Technik vorrangig mit Hilfe von taktilen Formprüfgeräten gemessen. Unter Laborbedingungen erlauben es diese Tastschnittverfahren, Gestaltabweichungen mit hoher Präzision zu erfassen. Jedoch benötigen diese Messgeräte eine aufwendige Justage des Prüflings sowie hohe Messzeiten.

Als schnelle optische Messverfahren zur Erfassung von Oberflächenprofilen rotationssymmetrischer Prüflinge sind weiterhin Autofokus-Verfahren und Triangulationsverfahren bekannt.

Autofokus-Verfahren und Triangulationsverfahren messen punktweise Höhendifferenzen in Bezug zu einer idealen Tastbahn. Beim Triangulationsverfahren wird das vertikale Auflösungsvermögen wesentlich vom Einfallswinkel des Messlichtbündels und dem Abbildungsmaßstab des Messobjektivs bestimmt. Wird beim Triangulationsverfahren ausschließlich das gestreute Licht des Prüflings als Messsignal verwandt (z.B. US 4,373,804), ist ein vertikales Auflösungsvermögen von maximal 0,1 $\mu$m bzw. 0.005% des Messbereichs erreichbar, welches zur Formvermessung ausreicht jedoch eine präzise Welligkeitsanalyse nicht ermöglicht. Weiterhin ist das Verfahren für spiegelnde Oberflächen nicht einsetzbar. Beruht das Triangulationsverfahren auf der Vermessung des direkten Reflexes (z.B. US 2002/0145740), ist ein vertikales Auflösungsvermögen im Nanometerbereich realisierbar, jedoch das Verfahren auf spiegelnde Oberflächen beschränkt bei einem kleinen vertikalen Messbereich.

Autofokussensoren messen die Höhe eines beleuchteten Oberflächenpunktes zu einer Bezugsbahn mit hoher vertikaler Auflösung bei gleichzeitig großem Messbereich (vgl. z.B. EP 0271646 B1), erfordern jedoch bei rauen Oberflächen lange Messzeiten, da die Fokuspunktlage durch die Rauheit der Prüflingsoberfläche stark variiert und ein Nachstellen des Objektivs für jeden Messpunkt notwendig ist. Hauptnachteil der Triangulations- und Autofokusverfahren ist jedoch, dass die Fehler der Führungsbahn direkt in das Messergebnis einfließen und die Verfahren somit Präzisionsdrehtische für die Prüflingsrotation und eine genaue Justage des Prüflings benötigen. Weiterhin sind Schwingungen des Messsystems und/oder des Prüflings zu vermeiden und folglich genaue Messergebnisse nur unter Laborbedingungen zu erzielen. So werden z.B. bei Rundheitsmessungen zylindrischer Prüflinge die durch Exzentrizität und Neigung verursachten Messbahnabweichungen durch aufwendige Justiervorschriften minimiert (vgl. US 4,731,934). Solche Verfahren eignen sich nicht für eine schnelle near-process- oder in-process Messung von Welligkeiten und Formabweichungen. Ein Algorithmus zur nachträglichen Exzentrizitätskorrektur der Profilhöhenmessdaten durch Näherungsverfahren ist in US 5,926,781 vorgestellt. Obwohl die Verschiebung des Querschnittmittelpunktes zum Rotationszentrum sich nach diesem Verfahren gut ermitteln lässt, kann die anschließende Näherung des Höhenprofils in Umfangsrichtung bei äquidistanter Winkelabtastung zum Querschnittmittelpunkt nur dann das reale Höhenprofil approximieren, wenn die Exzentrizität und alle Mess- und Führungsbahnfehler klein sind. Somit ist das Verfahren ebenfalls für einen in-process Einsatz ungeeignet.

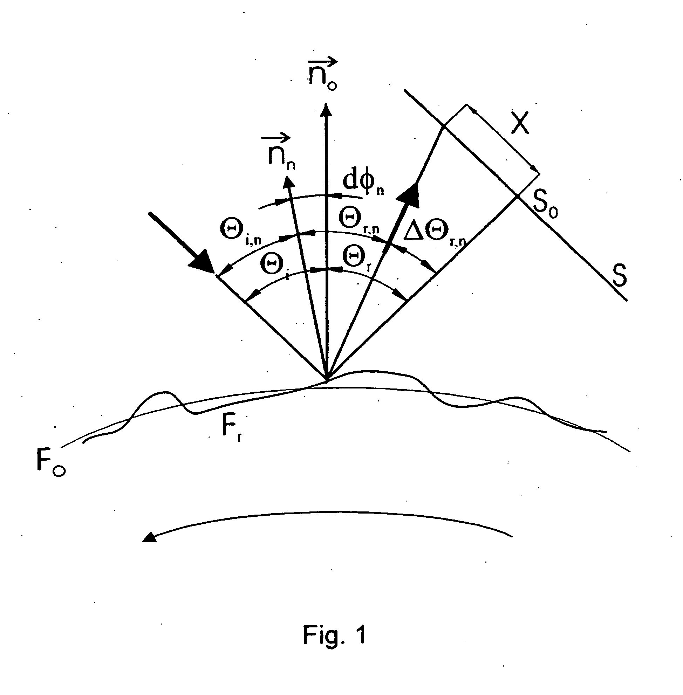

Verfahren, bei denen Führungsbahnfehler während der Profilabtastung die Messergebnisse kaum beeinflussen, sind Winkelmessverfahren. Ein Messlichtbündel beleuchtet die Prüflingsoberfläche unter einem definierten Einfallswinkel $\Theta_i$ (vgl. Fig. 1). Das von der Prüflingsoberfläche reflektierte Lichtbündel ist in einer Ebene S registrierbar und die Auslenkung X des reflektierten Lichtbündels zu einer kalibrierten Nullposition $S_0$ kann erfasst und bewertet werden. Die Nullposition eines in der Ebene S befindlichen Empfängers kennzeichnet den Reflexionswinkel $\Theta_r$ einer ideal ebenen Oberfläche $F_0$, die sich in der Tastbahn liegend befindet und deren Oberflächennormalen $\bar{n}_0$ den Gradienten der Tastbahn entsprechen. Ein lateraler Versatz X zur Nullposition auf dem Positionsempfänger ergibt sich immer dann, wenn der lokale Gradient $\bar{n}_n$ des beleuchteten realen Oberflächenprofils $F_r$ von dem Tastbahngradienten abweicht. Dieser Versatz ist proportional zum Tagens des Differenzwinkels $\Delta\Theta_{r,n}$, aus dem nach dem Reflexionsgesetz der lokale Neigungswinkel $d\phi_n$ berechnet werden kann. Um das Höhenprofil eines Prüflings mit Hilfe einer Winkelmessung zu bestimmen, wird die Prüflingsoberfläche $F_r$ mit einer gegebenen Tastschrittweite dx abgetastet und durch Integration der lokalen Oberflächen neigungen $d\phi_n$ das Profil des Prüflings berechnet. Unter sinngemäßer Ausnutzung des Hebelgesetzes kann bei einem langen Lichtweg des reflektierten Lichtbündels der lokale Neigungswinkel der beleuchteten Oberfläche um ein Vielfaches gegenüber Führungsbahnfehlern (z.B. Höhenversatz zur Tastbahn) verstärkt werden. Somit ist das Verfahren auch unempfindlich gegen vertikale Schwingungen des Prüflings (siehe z.B. DE 3503858 A1, DE 202004009727 U1) und ermöglicht zusätzlich die Bestimmung der Rauheit, wenn das Streuverhalten des reflektierten Lichtbündels z.B. mit einer CCD-Zeile winkelaufgelöst gemessen wird (US 4,859,062).

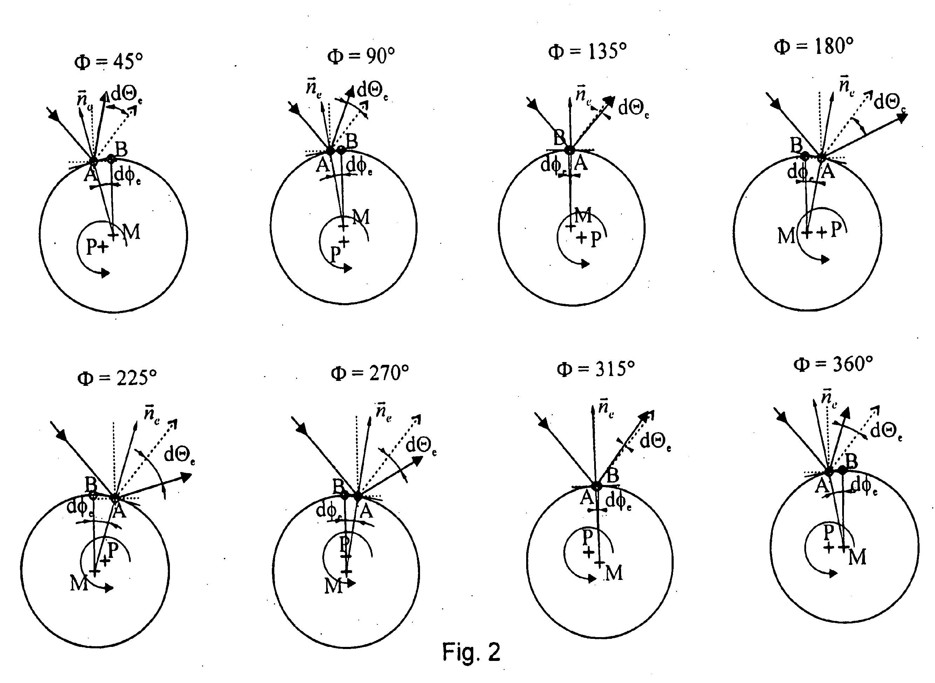

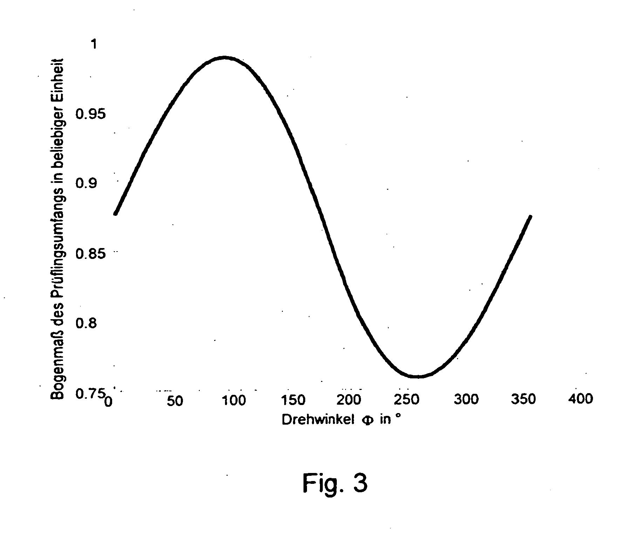

Bei der Rundheitsmessung mittels eines Drehtischs zum Bestimmen des Oberflächenprofils eines zylindrischen Prüflings in Umfangsrichtung ist der Einfluss der Exzentrizität sowie vertikaler Schwingungen auf die Profilhöhenbestimmung nach dem vorstehend zitierten Winkelmessverfahren unkritisch. Mit Hilfe einer Hochpassfilterung (JP 57-161610 A) kann die durch die Exzentrizität eingebrachte erste Fourierkomponente aus dem Höhenprofil ausgefiltert werden, während kurzwellige vertikale Schwingungsanteile, infolge der kurzen Integrationsintervalle, im Messergebnis nahezu unbeachtet bleiben. Jedoch führt die Exzentrizität des Prüflings auch zu einer Verzerrung der Abtastpunkte in Umfangsrichtung. Der sich so ergebende Einfluss der Exzentrizität auf das Reflexionsverhalten des Messstrahls bei einer vollen Umdrehung des Prüflings ist beispielhaft in Figur 2 verdeutlicht. Ein zu untersuchender Zylinderabschnitt, bspw. einer Welle, ist als Kreis in mehreren Drehphasen dargestellt, wobei er mit dem Kreismittelpunkt M um die Rotationsachse P gedreht wird. Die Amplitude der Exzentrizität ergibt sich aus dem Abstand zwischen P und M. Je nach Winkelausrichtung der Exzentrizität schwankt der Beleuchtungsort A um den lotrechten Punkt B des Prüflings. Bei einer festen Rotationswinkelschrittweite $\Delta\Phi$ variiert die reale Winkelabtastung auf der Oberfläche des Prüflings bei Exzentrizität. Die mit Hilfe der Differenzwinkelmessung ermittelten Profilhöhen des Prüfling ergeben sich somit nicht aus einer äquidistanten Abtastung des Zylinderumfangs, sondern aus Tastabständen, die je nach azimutaler Lage der Exzentrizität um einen Mittelwert sinusförmig schwanken, was in Figur 3 dargestellt ist. Besonders für die Analyse hochfrequenter Welligkeiten ist diese Verzerrung kritisch, da sie zu einer Frequenzbanderweiterung führt, die eine Ermittlung der real vorhandenen Hauptfrequenz aus dem Fourierspektrum des Umfangsprofils verhindert.

Mit Hilfe von Multisensorik (vgl. z.B. W. Gao, S. Kiyono, T. Sugawara: High-accurracy oundness measurement by new error separation method; Prec. Eng. 21, 123-133 (1997)) können Exzentrizitäten bei der Prüflingsrotation erfasst und korrigiert werden, jedoch müssen die Sensoren genau aufeinander abgestimmt werden und der Prüflingsumfang für die Sensoren über einen großen Winkelbereich frei zugänglich sein, um mehrere Sensoren radial versetzt anordnen zu können, was nicht nur eines erheblichen Aufwands bedarf, sondern häufig auch an real existierenden technischen Gegebenheiten scheitert.

Weiterhin sind Vorrichtungen, die sich anderer Messverfahren bedienen, aus dem Stand der Technik bekannt, nämlich:

Eine kompakte Vorrichtung zur Abstandsbestimmung mit Hilfe eines Triangulationsverfahrens wird in US 4,596,460 vorgestellt. Dort wird, mit Hilfe eines einfachen Optikkonzepts, sowohl der Beleuchtungs- als auch der Beobachtungsstrahlengang über dieselben Optikbauteile aus- und eingekoppelt. Eine Fokussierlinse bildet das außeraxiale Strahlenbündel der Beleuchtungsquelle auf eine Prüflingsoberfläche ab. Dabei wird ein zur Linse ausgerichtetes Dachkantenprisma zur Strahlablenkung genutzt. Eine Dachseite des Prismas lenkt den Beleuchtungsstrahlengang so, dass das konvergente Beleuchtungslichtbündel unter einem definierten Einfallswinkel auf die Prüflingsoberfläche fällt. Das an der Prüflingsoberfläche reflektierte Lichtbündel wird über dasselbe Prisma empfangen und an der anderen Seite des Dachprismas rückgelenkt. Über die Linse wird der Beobachtungsstrahlengang eingesammelt und als außeraxiales Bündel entgegengerichtet zum Beleuchtungsstrahlengang auf der anderen Seite der optischen Achse auf eine Empfangseinheit abgebildet. Das kompakte Optikkonzept verlangt eine sehr präzise Justierung aller optischer Komponenten zueinander, das besonders wegen der außeraxialen Strahlführung aufwendig und störanfällig ist. Eine Vereinfachung der Justierung ergäbe sich, wenn die optischen Komponenten mit Hilfe von präzisen mechanischen Abstandshaltern zusammengefasst werden. Die Fertigung solcher Bauteile ist jedoch aufwendig und kostenintensiv.

Ein einfacher kompakter Sensor zur optischen Kontrolle eines Oberflächenzustands wird in EP 0 628 787 A2 vorgestellt. Ein streifend einfallendes Lichtbündel wird von der Prüflingsoberfläche reflektiert und gestreut. Mit Hilfe zweier Sensoren werden z.B. die Intensitäten des senkrecht und parallel polarisierten Lichts des direkt reflektierten Lichtbündels erfasst und zueinander ins Verhältnis gesetzt. Dazu kann, wie dort beschrieben, u.a. ein Prisma verwandt werden, wobei ein Polarisationsstrahlteiler die beiden Polarisationskomponenten aufspaltet und mit einer Spiegelschicht auf eine weitere Prismenfläche umlenkt. Der Strahlversatz der beiden Polarisationskomponenten, der durch die Polarisationsstrahlteilerplatte und Spiegelschicht eingebracht wird, kann genutzt werden, um zwei Empfänger direkt an die Prismenfläche anzuordnen, die die Intensitäten getrennt voneinander messen. Das Prisma dient als Bezugskörper zur definierten Strahlumlenkung und Erfassung. Jedoch sind die Prismenwinkel, wie dort vorgeschlagen, nicht geeignet, um eine gezielte Störlichtunterdrückung zu bewirken.

In einer anderen Anwendung (vgl. DE 44 34 822 C1) werden zwei Prismen ausschließlich zur Strahlführung genutzt. Dadurch ist eine preiswerte Optik zu realisieren, die einen geringen Justieraufwand erfordert. Nach einmaliger senkrechter Justage der Beleuchtungsquellen zu den Prismengrundflächen geben die Prismenwinkel die Bezugskoordinaten des Messsystems an. So werden beispielhaft eine Prismenfläche als Anlagefläche für eine Empfängereinheit genutzt. Weiterhin können durch Optimierung der Prismenwinkel parasitäre Reflexe minimiert bzw. ausgeschlossen werden. Jedoch bezieht sich diese Anordnung auf die Vermessung einer Wegdifferenz anhand von zwei reflektierten Strahlen zur Dickenbestimmung optisch transparenter Materialien.

Um ein Verfahren zur Welligkeits- und Formabweichungsbestimmung fertigungsnah einsetzen zu können, muss es als einfache robuste Vorrichtung konzipiert und aufgebaut werden.

Vorliegender Erfindung liegt somit die Aufgabe zugrunde, ein Verfahren und eine zur Durchführung des Verfahrens geeignete Vorrichtung anzugeben, die vorstehend beschriebene Nachteile des Standes der Technik nicht aufweisen, wobei mit einem geringen Messaufwand und hoher Stabilität gegenüber störenden Umwelteinflüssen schnell Formabweichungen und Welligkeiten quantitativ erfass- und bewertbar sein sollen, der optische Zustand der zu untersuchenden Oberflächen (hochreflektierende oder rauere Oberflächen) ohne Einfluss auf das Verfahren sind und somit die vorgeschlagene Lösung im near-process- oder in-process vorteilhaft einsetzbar ist.

Ausgehend von bekannten Verfahren zur Bestimmung von Formabweichungen und Welligkeiten von rotationssymmetrischen Teilen, bei dem ein Messlichtstrahl unter einem vorgebbaren Winkel in Umfangsrichtung des Prüfteils eingestrahlt und der reflektierte Messlichtstrahl bei Drehung des Prüfteils um eine Achse senkrecht zur Umfangsrichtung detektiert wird, wird die Aufgabe vorliegender Erfindung durch den Gegenstand des Anspruchs 1.

Zum leichteren Verständnis der Erfindung soll nachstehende allgemeine Beschreibung dienen:

Eine Beleuchtungseinrichtung beleuchtet die zu untersuchende rotationssymmetrische Oberfläche in einem definierten Einfallswinkel $\Theta_i$ in Umfangsrichtung. Der Schwerpunkt des von der Oberfläche reflektierten Lichtbündels wird mit Hilfe eines positionsempfindlichen optoelektronischen Sensors detektiert. Bei Rotation des Prüflings um eine Achse P, deren Zentrum in der Nähe des Querschnittmittelpunktes M liegt und quasi parallel zur Prüflingsachse verläuft, wird das unter dem Winkel $\Theta_{r,n}$ reflektierte Messlichtbündel in Abhängigkeit vom lokalen Oberflächengradienten des beleuchteten Oberflächengebiets $\overline{n}$ ausgelenkt. Die Winkeldifferenz zwischen realem und idealem Reflexionswinkel $\Theta_{r,n}$-$\Theta_r$ (im idealen Fall steht der Oberflächengradient $\overline{n}_0$ senkrecht zur Tastbahn) wird auf der positionsempfindlichen Fläche S des optoelektronischen Empfängers als Wegdifferenz X gemessen (vgl. Fig. 1). Diese Auslenkung wird bspw. bei mindestens zwei geschlossenen Umdrehungen des Prüflings mit äquidistanter Winkelschrittweite um die Drehachse P aufgezeichnet. Bei bekanntem Abstand zwischen Sensor und Prüflingsoberfläche können die gemessenen Positionssignale X in Reflexionswinkel $\Theta_{r,n}$ umgerechnet werden. Nach dem Reflexionsgesetz

$$\Theta_{r,n} = \Theta_i + 2(d\phi_n - \Theta_i),$$

wobei $\Theta_{r,n}$ der lokale Reflexionswinkel und $\Theta_i$ der Einfallswinkel des Messlichtbündels sind, lassen sich die lokalen Oberflächenneigungswinkel $d\phi_n$ des Prüflings in Umfangsrichtung bestimmen. Lokale Fehler der Führungsbahn (z.B. Rundlauffehler der Prüflingsspannvorrichtung), Welligkeiten durch Lagerspiel der Spannvorrichtung sowie hochfrequente Schwingungen zwischen Prüflingsoberfläche und Sensor beeinträchtigen die Genauigkeit der Messwerte nur geringfügig, da infolge des langen "Hebelarms" des reflektierten Messlichtbündels das Messsignal vorrangig Winkeländerungen des direkten Reflexes erfasst. Jedoch führen langwellige Bahnabweichungen, wie z.B. die durch die Exzentrizität verursachte, zu langwelligen Verschiebungen des Beleuchtungspunktes A und damit zu einer ungleichmäßigen Abtastung des Prüflingsumfangs. Liegt der Querschnittsmittelpunkt M des Prüflings nicht auf der Drehachse P, verursacht die Krümmung der zylindrischen Prüflingsoberfläche eine Drehung $d\phi_e$ des Oberflächengradienten $\overline{n}_c$ des beleuchteten Oberflächenpunkts A in Abhängigkeit von Amplitude der Exzentrizität PM, der Winkellage der Exzentrizität, dem Prüflingsradius R und dem Einfallswinkel $\Theta_i$. Der direkte Reflex ändert seine Richtung um die Winkeldifferenz $d\Theta_e$ bei exzentrischer Umdrehung des Prüflings. Ein gemessene Winkelauslenkung eines realen zylindrischen Oberflächenprofils bei exzentrischer Drehung ergibt sich wie folgt:

$$d\Theta_r(\Phi) = \Theta_r - \Delta\Theta_{r,n}(\Phi) - d\Theta_e(\Phi).$$

Das Messsignal $d\Theta_r(\Phi)$ setzt sich zusammen aus einer kurzwelligen lokalen Abweichung des Oberflächengradienten $\overline{n}_n$ zur lotrechten idealen Tastbahnnormalen $\overline{n}_0$, die die Welligkeit bzw. Formabweichung des realen Oberflächenprofils verursacht, und einer langwelligen Abweichung der Normalen $\overline{n}_c$ zu $\overline{n}_0$, die durch die Exzentrizität eingebracht wird (vgl. zu Vorstehendem Fig. 2).

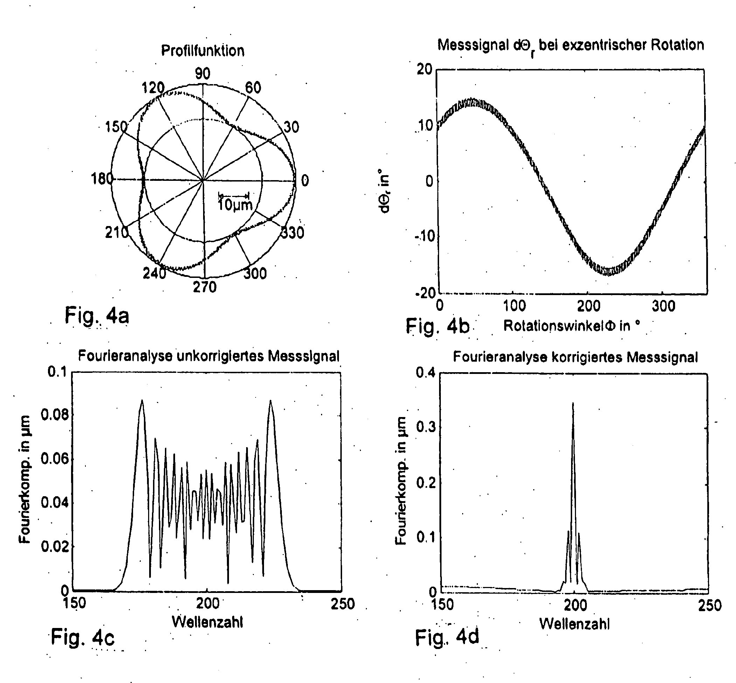

Um die Fehlereinflüsse der Exzentrizität auf die lokale Profilneigungsbestimmung zu minimieren, werden die langwelligen Anteile des Messsignals $d\Theta_e(\Phi)$ direkt zur Korrektur genutzt. Mit Hilfe des tiefpassgefilterten Messsignals werden nach dem Reflexionsgesetz die langwelligen Neigungswerte $d\phi_e$ für jeden Rotationswinkelwert $\Phi$ berechnet. Die Winkelverschiebung $d\phi_e$ entspricht exakt der Verzerrung der äquidistanten Winkelabtastung bei exzentrischer Rotation eines Prüflings. Die gemessenen Winkeldifferenzen sind somit eine Funktion $d\Theta_r(\Phi+d\phi_e)$. Mit Hilfe einer Interpolation der Messwerte mit einer äquidistanten Winkelteilung kann somit der Einfluss der Exzentrizität ohne Zusatzinformation erfindungsgemäß kompensiert werden. Den Einfluss der Exzentrizität auf ein unkorrigiertes und ein korrigiertes Signal verdeutlicht Fig. 4. Es wird beispielhaft von einem Zylinder ausgegangen, der eine Welligkeit von 200 Wellen pro Umfang mit einer Amplitude von 500nm und eine Formabweichung von drei Wellen pro Umfang mit einer Amplitude von 5$\mu$m aufweist, welcher exzentrisch gedreht wird, wobei die Verschiebung zwischen Rotationsachse P und Kreismittelpunkt M ein Zehntel des Zylinderradius betragen soll. Fig. 4a zeigt die Profilabweichung des Zylinders von der idealen Kreisform in überzogener Darstellung. Die resultierende Winkelauslenkung eines Messstrahls für äquidistante Winkelabtastung um P ist in Fig. 4b dargestellt. Neben dem hochfrequenten Signalanteil, der ein Maß für die lokale Winkeldifferenz der Welligkeit ist, prägt sich deutlich die langwellige Verschiebung aus, die durch die Exzentrizität eingebracht wird. Eine Fourieranalyse dieser gemessenen Winkelwerte, wie sie nach dem Stand der Technik hier durchgeführt würde, liefert jedoch kein eindeutiges Signal bei der dominanten Wellenzahl 200, wie es anhand vorstehender Ausführungen in Fig. 4c beispielhaft dargestellt ist. Wird das gewonnene Signal jedoch mit der erfindungsgemäßen Korrektur nachbearbeitet, bildet sich deutlich die dominante Welligkeit im Fourierspektrum heraus (vgl. Fig.4d). Mit Hilfe des erfindungsgemäßen Verfahrens sind selbst hohe Exzentrizitäten (bis etwa ein Zehntel des Probendurchmessers) im Signalverlauf gut korrigierbar. Einzige Voraussetzung ist, dass die Empfängerfläche S groß genug ist, um alle Winkelwerte bei Rotation zu erfassen.

Da die berührungslose optische Winkelmessung an zylindrischen Proben hohe Messgeschwindigkeiten ermöglicht, ist es vorteilhaft, für mehrere Umdrehungen die Messung durchzuführen. Kann dabei eine gleichförmige Drehbewegung angenommen werden, ist eine äquidistante Winkelabtastung ohne präzise Winkeistelltische möglich. Mit Hilfe einer externen Taktung (z.B. einem Rechteckimpulsgenerator) wird der Winkelwert des rotierenden Prüflings mit fester Frequenz abgetastet. Wird als positionsempfindlicher Empfänger z.B. eine positionsempfindliche Fotodiode PSD eingesetzt, wie dies im Rahmen dieser Erfindung bevorzugt erfolgt, erhält man zwei ortstypische Signale. Das Summensignal der PSD erfasst die Gesamtintensität des vom Prüfling reflektierten Lichts und somit den lokalen Reflexionskoeffizienten. Das Differenzsignal der PSD kennzeichnet die lokale Winkelauslenkung des direkten Reflexes und somit den lokalen Neigungswinkel des realen Profils. Beide Signale eignen sich zur Korrelationsanalyse, um die Tastpunktanzahl einer vollen Umdrehung zu ermitteln und damit die Winkelschrittweite der Messung. Mit Hilfe beider Signale ist es sowohl für raue als auch für hoch reflektierende Oberflächen möglich, bei mehrfacher Umdrehung präzise Profilbestimmungen in Umfangsrichtung mit externer Taktung durchzuführen. Selbst im praktisch fast auszuschließenden Fall ideal reflektierender Zylinder lassen sich solche, durch Einbringung einer künstlichen Exzentrizität, nach dem vorgeschlagenen Verfahren vermessen, wobei die Exzentrizität nach der erfindungsgemäßen Vorschrift bei der Datenanalyse korrigierbar ist. Somit eignet sich das Verfahren gut für die In-process-Messung bei spanender Bearbeitung von rotationssymmetrischen Teilen. Infolge der schnellen Messung mehrerer Prüflingsumdrehungen sind die systematisch auftretenden rotationswinkelabhängigen Signale als periodische Funktionen identifizierbar und lassen sich durch eine Signalfilterung von allen zufälligen Messfehlern trennen.

Die Erfindung soll nachstehend anhand von Ausführungsbeispielen und schematischer Zeichnungen näher erläutert werden. Es zeigen:

Fig. 1      schematisch das Prinzip von Differenzwinkelmessungen,

Fig. 2      eine schematische Darstellung des Einflusses einer exzentrischen Rotation eines zylindrischen Prüflings bei einer Winkeldifferenzmessung,

Fig. 3      eine beispielhaft erhaltenen Kurve einer Umfangsabtastung eines zylindrischen Prüflings bei exzentrischer Rotation,

Fig. 4a     eine mikrogeometrische Profilfunktion eines Zylinders,

Fig. 4b     ein normiertes Reflexionssignal (Differenzwinkelkurve) bei exzentrischer Rotation,

Fig. 4c     beispielhaft die Fourierkomponeten einer unkorrigierten Differenzwinkelkurve,

Fig. 4d     die Fourierkomponeten einer erfindungsgemäß korrigierten Differenzwinkelkurve,

Fig. 5      schematisch einen prinzipiellen Aufbau einer erfindungsgemäßen Vorrichtung,

Fig. 6      beispielhafte Messsignale einer PSD für eine gleichförmig rotierende Getriebewelle, wobei die obere Kurve das Summensignal und untere Kurve das Differenzsignal der PSD darstellt,

Fig. 7      zeigt die Autokorrelationsfunktionen der Signalverläufe aus Figur 6,

Fig. 8      zeigt im oberen Diagramm das anhand der Kalibrierdaten berechnete Neigungswinkelsignal der Messung nach Fig. 6 und 7 und im unteren Diagramm die exzentrische Neigungswinkelverschiebung nach einer Tiefpassfilterung mit einem Gaußfilter,

Fig. 9      zeigt den Einfluss des Messlichtbündeleinfallswinkels auf die Phase und die Amplitude der exzentrischen Neigungswinkelverschiebung und

Fig. 10    Kurven für das Primärprofil, die Formabweichung und ein dominantes Welligkeitsprofil anhand eines Beispiels.

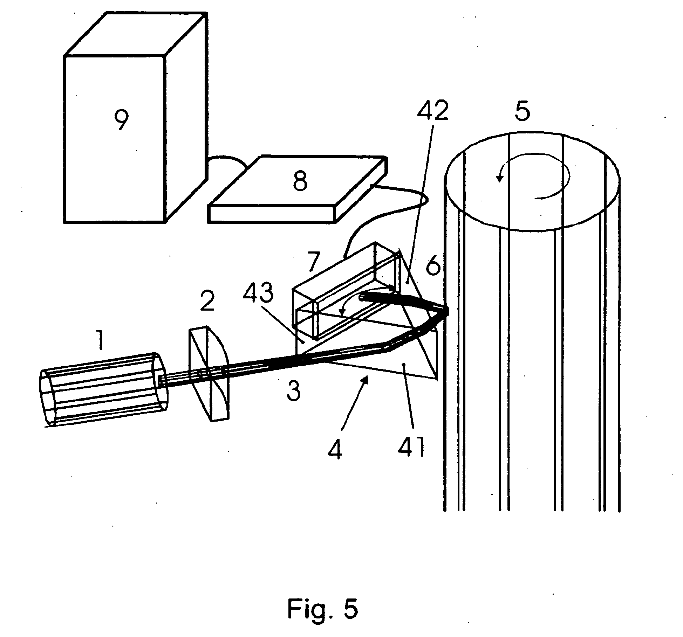

Zum leichteren Verständnis des erfindungsgemäßen Verfahrens und der dafür erforderlichen Signalgewinnung soll zunächst anhand von Figur 5, die schematisch den prinzipiellen Aufbau einer dafür konzipierten Vorrichtung veranschaulicht, erläutert werden.

Eine Laserdiode 1 emittiert ein Lichtbündel 3, das mit Hilfe einer Optik 2 auf eine in Drehbewegungen versetzbare Prüflingsoberfläche 5 fokussiert wird. Für die Fokussieroptik ist für die Vermessung rauer Oberflächen günstigerweise eine Zylinderlinse gewählt, da infolge der Linienbeleuchtung bei kleinen Linienbreiten in Umfangsrichtung über die Specklestruktur des reflektierten Lichtbündels 6 mit Hilfe der Empfängerfläche eines positionsempfindlichen optoelektronischen Empfängers 7 gemittelt werden kann. Dies führt zu einer verbesserten Schwerpunktbestimmung des reflektierten Lichtbündels 6 bei kohärentem Rauschen des Bündels und ermöglicht somit eine Differenzwinkelmessung an rauen zylindrischen Prüflingsoberflächen. Zentrales optisches Bauteil der beanspruchten Vorrichtung ist ein im Strahlengang angeordnete Prisma 4, das sowohl das einfallende Lichtbündel 3 als auch das von der Prüflingsoberfläche reflektierte Lichtbündel 6 umlenkt. Infolge dieser Winkeltransformation kann eine kompakte Bauweise des Sensorkopfs erreicht werden bei gleichzeitig großem Messbereich eines im Rahmen des Verfahrens zu ermittelnden Differenzwinkels. Der Justiervorgang der Optik vereinfacht sich, da das Prisma 4 als Winkelbezugssystem dienen kann. Die Prismenflächen, die präzise Prismenwinkel einschließen, sind Bezugsflächen für einen optoelektronischen Empfänger 7 und die Beleuchtungsoptik mit Laserdiode 1 und Fokusoptik 2. Die Prismenfläche, auf die das reflektierte Lichtbündel 6 gelangt, wird im Rahmen der Erfindung als direkte Anlagefläche für den Empfänger 7 gewählt. Bei der Beleuchtungsoptik kann der direkte Reflex an der ersten brechenden Prismenfläche im einfallenden Strahlengang zur Justage und genauen Ausrichtung der optischen Achse des Beleuchtungssystems genutzt werden. Somit ergeben sich präzise Einstellungsmöglichkeiten der Winkel für das einfallende und reflektierte Lichtbündel, die über das Prisma einem festen Bezugssystem zugeordnet sind. Unter Ausnutzung der Totalreflexion an der Auflagefläche zwischen Prisma 4 und Empfänger 7 ist der Sehwinkel des Empfängers eingegrenzt, was sich vorteilhaft zur zusätzlichen Unterdrückung von Störlicht aus der Umgebung auswirkt. Bei der Messwertaufnahme rotiert der Prüfling 5 mit einer bekannten Winkelschrittweite oder gleichförmig, wie im Verfahren detaillierter beschrieben, um eine Rotationsachse P, die in der Nähe des Querschnittmittelpunkts M des Prüflings 5 liegen sollte und parallel zur Prüflingsachse ausgerichtet ist. Bei jedem Rotationswinkelwert erfolgt die Auslesung des optoelektronischen Empfängers 7 über eine Messdatenerfassungseinheit 8, die die Messwerte verstärkt, digitalisiert und speichert. Die Messdatenerfassungseinheit 8 realisiert weiterhin die Synchronisation der Messwertaufnahme mit der Rotation des Prüflings. Die Synchronisation kann bei gleichförmiger Drehbewegung des Prüflings über einen externen oder internen Taktgeber erfolgen oder bei definierter Winkelschrittstellung des Prüflings über eine direkte Ansteuerung der Datenerfassungseinheit 8 durch Signale eines üblichen Motorcontrollers vom Drehmotor der Prüflingsaufnahme. Zur Auswertung der Messung werden die Messdaten an eine Auswerteinheit 9 übertragen, die die Berechnung von Welligkeits- und Formabweichungsparametem in später beschriebener Weise durchführt, diese Parameter anzeigt, protokolliert und gegebenenfalls mit Toleranzvorgaben vergleicht und zur Steuerung eines automatischen Qualitätskontrollprozesses an eine Steuereinheit weiterleitet. Dazu erfolgt die Zuordnung der Messwerte zu äquidistanten Winkelschrittweiten bei gleichförmiger Prüflingsrotation über die erfindungsgemäß beschriebene Korrelationsanalyse der Messsignale bei mindestens zwei Umdrehungen des Prüflings. Auftretende Exzentrizitäten bei der Prüflingsrotation werden durch das erfindungsgemäße Verfahren kompensiert und im letzten Schritt die gemessenen Differenzwinkel in Profilhöhen umgerechnet, aus denen die Auswerteeinheit 9 die notwendigen Welligkeits- und Formabweichungsparameter berechnet.

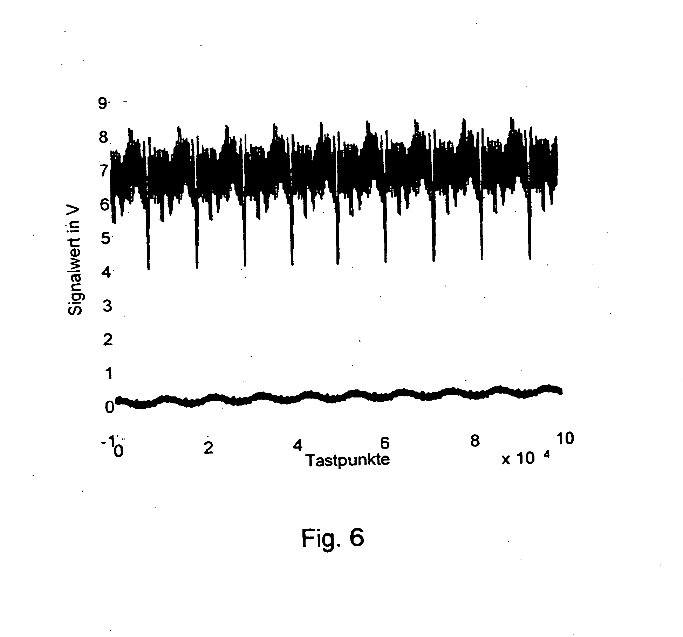

Das Verfahren wird im Folgenden anhand eines konkreten Ausführungsbeispiels näher beschrieben. Eine Getriebewelle mit einem Durchmesser von 44,7mm wird im Beispiel mit Hilfe eines Dreibackenfutters quasi zentrisch gefasst und durch Rotation des Dreibackenfutters durch einen Drehtisch in eine gleichförmige Rotation versetzt. Der erfindungsgemäße optische Messkopf wird radial zur rotierenden Welle zugestellt, bis der Messkopf den optimalen Arbeitspunkt erreicht hat. Diese Position kann durch Erfassung der Signale der Empfängereinheit automatisch angefahren werden, da beim optimalen Arbeitsabstand des Messkopfes das an der Prüflingswelle reflektierte Licht den Empfänger 7 in der Nullposition beleuchtet. Somit ist die Gesamtintensität des auf den Empfänger fallenden Lichts (im folgenden mit Summensignal bezeichnet) hoch und der Schwerpunkt des reflektierten Lichtbündels 6 beleuchtet die Empfängerfläche im Zentrum, so dass das positionsabhängige Signal der PSD Null ist (im folgenden mit Differenzsignal bezeichnet). Ist der optimale Arbeitsabstand des Messkopfs zur Prüflingsoberfläche eingestellt, erfolgt die Messwertaufnahme. Ein Messtaktgeber wird aktiviert, der die Messsignale mit fester Frequenz erfasst und einer Speichereinheit 8 zuführt. Der Messtaktgeber ist z.B. ein externer Rechteckgenerator, der über den Triggereingang einer PC-Messkarte die Messwertaufnahme steuert. Für jeden Messpunkt wird die Intensität des reflektierten Lichtbündels sowie die Auslenkung zur Nullposition erfasst, mit Hilfe eines AD-Wandlers digitalisiert und im Puffer eines PC's 9 gespeichert. Figur 6 zeigt die so aufgenommenen Messsignale der PSD für eine gleichförmig rotierende Getriebewelle mit einem Durchmesser von 44,7mm. Die Abtastfrequenz betrug 50kHz. In Figur 6 ist für beide Signale (obere Kurve ist das Summensignal und untere Kurve das Differenzsignal) deutlich ein periodisch wiederkehrender Funktionsverlauf zu erkennen, der aus der mehrfachen Umdrehung der Prüflingswelle resultiert. Bildet man die jeweilige,

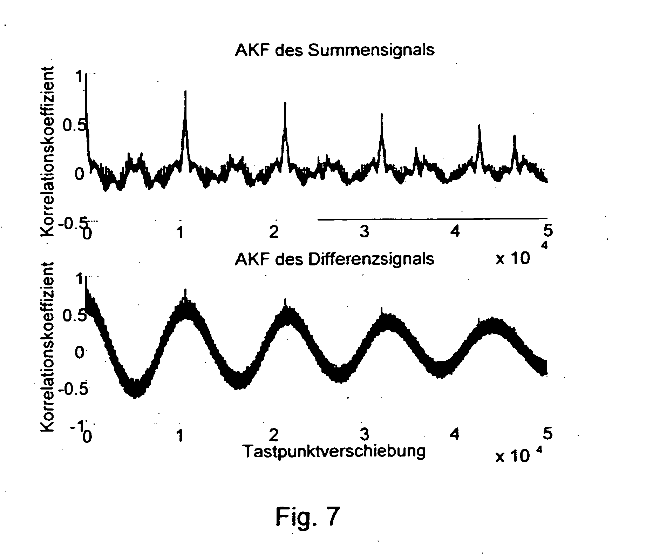

Autokorrelationsfunktion der beiden Signale, kann man die Anzahl der Messpunkte pro Prüflingsumdrehung ermitteln. Figur 7 zeigt die

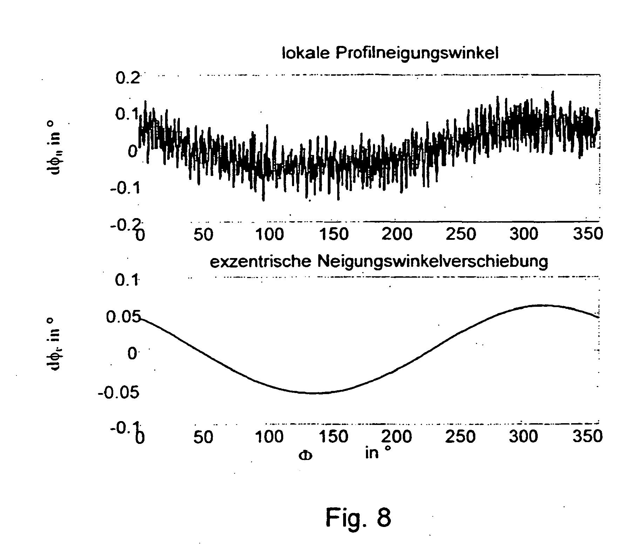

Autokorrelationsfunktionen der Signalverläufe aus Figur 6. Der Autokorrelationskoeffizient ist ein Maß der Selbstähnlichkeit einer Funktion bei deren lateraler Verschiebung. Der Koeffizient erreicht ein Maximum, wenn die Verläufe der verschobenen und unverschobenen Funktion quasi deckungsgleich werden, welches bei der Verschiebung um eine Umdrehung erreicht wird. Dieses Maximum wiederholt sich periodisch bei jeder weiteren abgeschlossen Umdrehungsposition. Für das dargestellte Beispiel ergibt sich somit eine Tastpunktanzahl pro Prüflingsumdrehung von 10691. Da die Getriebewelle eine Welligkeit besitzt, ist die Autokorrelationsfunktion des Differenzsignals durch eine kurzwellige periodische Funktion überlagert, weist jedoch bei den Positionen der abgeschlossenen Umdrehungen ebenfalls deutliche Maxima auf. Mit Hilfe einer Extremwertsuche werden die Maxima der Autokorrelationsfunktionen ermittelt und aus deren Positionen die Tastpunktanzahl pro Prüflingsumdrehung berechnet. In einem anschließenden Schritt ist es nun möglich, die Messsignale von eventuell auftretenden Störsignalen mit Hilfe einer Fourieranalyse zu trennen. Die untere Grenzfrequenz des Messsignals ist durch die Anzahl der Umdrehungen definiert. Wurden mehrere Umdrehungen gemessen, sind alle langwelligeren Anteile im Signal auf Messfehler zurückzuführen. Mit Hilfe einer standardisierten Hochpassfilterung mit einem Gaußfilter können diese Störsignale sowohl aus dem Summenals auch dem Differenzsignal entfernt werden. Um Messfehler zu unterdrücken, deren Frequenzanteile im Frequenzband der Messsignale liegen, wird nach der Hochpassfilterung der Signale eine weitere Filterung durchgeführt. Dazu werden das Summen- und das Differenzsignal in Signalausschnitte zerlegt, deren jeweilige Längen genau einer Prüflingsumdrehung entsprechen. Diese Signalausschnitte werden fouriertransformiert und die Absolutanteile der Fourierkomponenten berechnet. Sowohl für das Summen- als auch das Differenzsignal lassen sich somit so viele Fourierfunktionen erzeugen, wie Umdrehungen gemessen wurden. Die Fourierkomponenten des eigentlichen Messsignals müssen in allen Fourierfunktionen der einzelnen Umdrehungen enthalten sein. Zur Rekonstruktion des Messsignals werden nun die in allen Teilfunktionen enthaltenen Fourierkomponenten mit dem jeweils kleinsten Amplitudenbetrag zu

einer Fourierreihe zusammengestellt und aus dieser durch Rücktransformation der gefilterte Signalverlauf generiert. Durch Normierung (d.h. Quotientenbildung aus Differenzsignal/Summensignal) der gefilterten Differenzsignale auf die gefilterten Summensignale erhält man die intensitätsunabhängigen Auslenkungssignale, die proportional zur lokalen Winkelauslenkung des reflektierten Lichtbündels sind. Anhand der Kalibrierdaten für den Prismenkopf können das intensitätsunabhängige Auslenkungssignal direkt in ein Reflexionswinkelsignal $d\Theta_r(\Phi)$ umgerechnet und nach der bekannten Reflexionsgleichung die lokalen Oberflächenneigungswinkel $d\phi_n$ ermittelt werden. Figur 8 zeigt im oberen Diagramm das anhand der Kalibrierdaten berechnete Neigungswinkelsignal der Messung nach Fig. 6 und 7. Die Exzentrizität der Messung ist im Signalverlauf enthalten. Mit Hilfe einer Tiefpassfilterung mit einem Gaußfilter der Grenzwellenlänge 1 lässt sich die exzentrische Neigungswinkelverschiebung bestimmen (vgl. Fig. 8 unteres Bild). Diese entspricht genau der erfindungsgemäßen Abtastpunktverzerrung bei exzentrischer Rotation eines Prüflings. Um eine äquidistante Abtastung des Oberflächenprofils sicherzustellen, muss das Messsignal $d\phi_n$ interpoliert werden. Die bei der Messung realisierte Oberflächenabtastung des Prüflings erfolgte bei den Winkelwerten $\Phi+d\phi_e(\Phi)$, wobei die Rotationwinkelwerte für $\Phi$ in dem Intervall 0˚ bis 360˚ mit Winkelschritten von 360˚/(Messpunktanzahl pro Umdrehung) liegen (in dem dargestellten Beispiel beträgt die theoretische Winkelschrittweite 0.0337˚). Mit Hilfe einer einfachen linearen Interpolation werden die Messwerte für eine äquidistante Abtastung mit der festen Winkelschrittweite 360˚/(Messpunktanzahl pro Umdrehung) ermittelt. Für das dargestellte Beispiel ist der Einfluss der Exzentrizität auf das Messsignal gering. Die maximale exzentrische Winkelverschiebung $d\phi_e$ beträgt etwas mehr als die Messschrittweite und führt somit zu maximalen Schrittweitenverzerrungen von etwa einem Winkelschritt. Die Entzerrung der Signalwerte ändert somit nur unmerklich das Signalverhalten. Besteht jedoch ein größerer Rundlauffehler zwischen gemessenen Prüflingszylinder und im Dreibackenfutter eingespannten Prüflingszylinder sowie eine generelle Exzentrizität der Spannvorrichtung zur Rotationsachse, führt die erfindungsgemäße Korrektur der Winkelabtastung zu einer entscheidenden Verbesserung bei der Welligkeitsanalyse (vgl. Fig. 4). Aus den Funktionen nach Fig. 8 werden im Folgenden die Form- und Welligkeitsparameter berechnet. Der Rundlauffehler bzw. die Exzentrizität wird aus $d\phi_e$ ermittelt. Beleuchtet man die Prüflingsoberfläche bei der Differenzwinkelmessung unter einem Einfallswinkel größer 0˚, ist das Maximum von $d\phi_e$ zur Amplitude der maximalen Bahnabweichung phasenverschoben (vgl. Fig. 2). Zudem setzt sich das Messsignal bei steigendem Einfallswinkel zusammen aus der lokalen Neigungswinkeldifferenz (die eigentliche Messgröße) und der wachsenden Ortsverschiebung durch die Bahnabweichung. Somit kann eine Ortskurvenberechnung, die ausschließlich auf der Integration von Neigungswinkelwerten beruht, nicht zur Bestimmung des Rundlauffehlers genutzt werden. Um den Rundlauffehler aus dem Messsignal ermitteln zu können, müsste eine Vorwärtssimulation des Deflexionsverhaltens des Prüflings bei gegebenen Prüflingsdurchmesser und Einfallswinkel des Messlichtbündels vorgenommen werden.

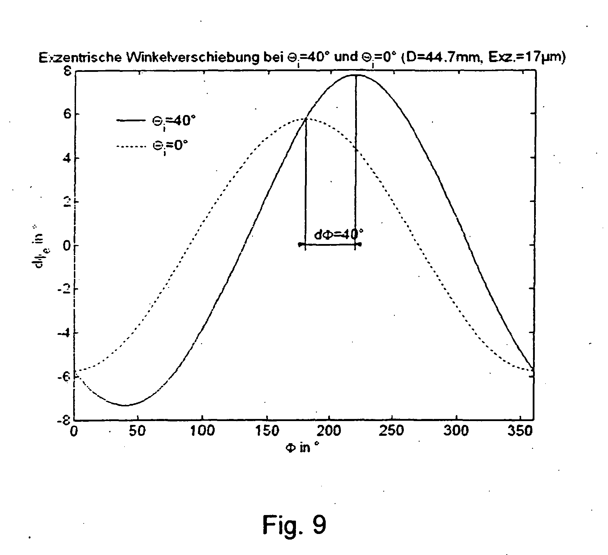

Eine gute, viel praktikablere Näherung für die Rundlauffehlerermittlung ist jedoch die nachstehend beschriebene. Figur 9 zeigt den Einfluss des Messlichtbündeleinfallswinkels auf die Phase und die Amplitude der exzentrischen Neigungswinkelverschiebung. Wird die Prüflingsoberfläche senkrecht beleuchtet (gestrichelter Kurvenverlauf) resultiert $d\phi_e$ ausschließlich auf der Neigungswinkelverschiebung des Beleuchtungsorts. Die zusätzliche Tastbahnabweichung führt ausschließlich zu einer Laufzeitverlängerung des Messsignals, die jedoch keine Auslenkung des reflektierten Lichtbündels auf dem positionsempfindlichen Empfänger verursacht. Bei bekanntem Prüflingsdurchmesser D und bei bekannter Anzahl von Winkelschritten pro Umdrehung N, die aus der Autokorrelationsfunktion gewonnen wurden oder bei einer Winkelschrittverstellung bekannt sind, lässt sich nach der Gleichung

$$z_{e,n} = \sum_{j=1}^{n} \tan(d\phi_{e,j}) \cdot \pi \cdot D/N \qquad n = 1, 2, ..., N-1, N$$

die Profilhöhen $z_{e,n}$ ermitteln, die den Tastbahnabstand für jeden Tastpunkt beschreiben. Das Maximum von $z_{e,n}$ gibt den Rundlauffehler an, der im gewählten Beispiel nach Fig. 9 17.4$\mu$m beträgt. Wird derselbe Prüfling unter einem Einfallswinkel von 40˚ beleuchtet, ergibt die Winkeldifferenzmessung ein erhöhtes Messsignal (vgl. Fig. 9, durchgezogene Linie). Zudem ist das Maximum gegenüber der senkrecht beleuchteten Messung genau um den Einfallswinkel verschoben. Figur 9 verdeutlicht, dass die mit 40˚ Einfallswinkel gemessene Kurve die andere Kurve genau im Maximum schneidet und dieser Schnittpunkt zum eigenen Maximum um den Einfallswinkel vorauseilt. Diese Tatsache wird für die Näherung des Rundlauffehlers genutzt. Erfolgt die Messung bei beliebigen Einfallswinkel $\Theta_i > 0˚$, so ermittelt man zunächst die Lage des Maximums der exzentrischen Winkelverschiebung $\Phi(d\phi_e = max) = \Phi_{max}$, bestimmt dann den Wert $d\phi_e(\Phi_{max} - \Theta_i)$, der dem Maximum um den Einfallswinkel der Messung vorauseilt. Die gemessene Kurve wird auf das Verhältnis $d\phi_e(\Phi_{max} - \Theta_i)/ d\phi_e(\Phi_{max})$ normiert, so dass man eine gedämpfte Kurve erhält, deren Maximum nun den Wert $d\phi_e(\Phi_{max} - \Theta_i)$ trägt. Aus dieser Kurve lassen sich wie oben beschrieben die Profilhöhen $z_{e,n}$ berechnen, aus denen sich der Rundlauffehler wie gezeigt ermitteln lässt. Diese Näherung führt zu guten Ergebnissen bei der Ermittlung von Rundlauffehlern. Bei Exzentrizitäten kleiner 10% bezogen auf den Radius des Prüflings sind die maximalen Abweichungen für die Rundlauffehlerermittlung nach dem oben beschriebenen Näherungsverfahren kleiner 2%.

Die Formabweichungs- und Welligkeitsanalyse richtet sich weitestgehend nach dem standardisierten Verfahren für Tastschnittmessungen. Die durch die Exzentrizität eingebrachte Winkelverschiebung $d\phi_e$ wird zum Messsignal $d\phi_n$ addiert und interpoliert. Die so korrigierten Messwerte $d\phi_n$ beziehen sich jetzt ausschließlich auf die lokalen Neigungswinkeldifferenzen der Prüflingsoberfläche. Das Umfangsprofil wird nun durch Summation der Neigungen wie folgt berechnet

$$z_n = \sum_{j=1}^{n} \tan(d\phi_j) \cdot \pi \cdot D/N ,$$

wobei $d\phi_j$ für den korrigierten Profilneigungswert (befreit vom Einfluss der Exzentrizität) steht.

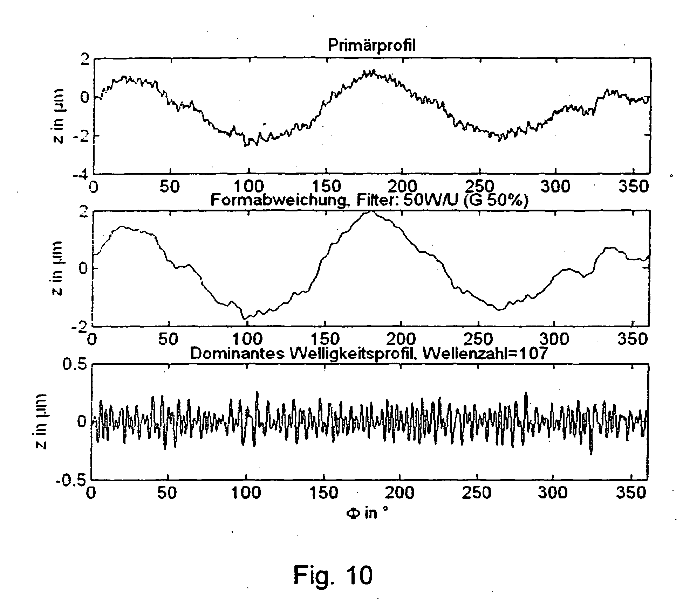

In Anlehnung an die VDA 2007 können nun nach bekannten Filterverfahren die Formabweichung sowie die dominanten Welligkeitsprofile aus dem Profil $z_n$ ermittelt werden. Laut Definition entspricht der Kurvenverlauf von $z_n$ dem Primärprofil (vgl. Fig. 10, oberstes Bild). Mit Hilfe eines standardisierten Tiefpassfilters, hier z.B. ein Gaußförmiger Tiefpass mit der Grenzwellenlänge 50 Wellen pro Umfang, lässt sich die Formabweichung, nach VDA2007 das W-Profil, ableiten (vgl. Fig.10, mittleres Bild). Der in der VDA2007 beschriebene Nullbandpass wird zu Generierung der dominanten Welligkeitsprofile genutzt. Für das gewählte Beispiel ist das dominante Welligkeitsprofil bei einer Wellenzahl von 107 Wellen pro Umdrehung gegeben und im untersten Bild von Fig. 10 dargestellt. Anhand dieser Profile ist es möglich, alle erforderlichen Profilparameter für die Formabweichungs- und Welligkeitsanalyse abzuleiten. Das Verfahren und die Vorrichtung lassen sich für einen großen Durchmesserbereich von ca. 1 mm bis 2m von rotationssymmetrischen Prüflingen einsetzen. Einzige Voraussetzung ist, dass die lokalen Oberflächenneigungen des Prüflings klein genug sind, um das reflektierte Messlichtbündel im vorgegebenen Messwinkelbereich der Messvorrichtung erfassen zu können. Im Beispiel reichte dazu ein Prisma mit einer Kantenlänge von 25mm und ein entsprechend nach obigen Maßgaben gewählter und angeordneter positionsempfindlicher Empfänger (PSD). Alle vorstehend aufgeführten Berechnungen werden durch entsprechend vorgesehene numerische Algorithmen vermittels entsprechender PC-Programme in der Auswerteeinheit 9 realisiert.

Alle in der Beschreibung, den Ausführungsbeispielen und den nachfolgenden Zeichnungen erkennbaren Merkmale können sowohl einzeln als auch in beliebiger Kombination miteinander erfindungswesentlich sein.

Bezugszeichenliste

1 -    Lichtquelle
2 -    abbildende Optik
3 -    einfallendes Lichtbündel
4 -    Prisma
5 -    Prüflingsoberfläche
6 -    reflektiertes Lichtbündel
7 -    positionsempfindlicher Empfänger
8 -    Messdatenerfassungseinheit
9 -    Auswerteeinheit


**Patentansprüche**

**1.** Verfahren zur Bestimmung von Formabweichungen und/oder Welligkeiten von rotationssymmetrischen Prüfteilen, bei dem

- das Prüfteil um seine Symmetrieachse gedreht wird,
- ein Messlichtstrahl in einer Ebene senkrecht zur Drehachse aus vorgebbarer Richtung auf den Umfang des Prüfteils eingestrahlt wird,
- die Auftreffpositionen des reflektierten Messlichtstrahls auf einem positionsempfindlichen Empfänger in jeweiliger Zuordnung zu einer Folge theoretisch äquidistanter Drehwinkelpositionen $\Phi_i$ des Prüfteils zumindest über eine vollständige Umdrehung des Prüfteils aufgezeichnet und gespeichert werden,
- anschließend eine Tiefpassfilterung der so gewonnenen Messkurve vorgenommen wird, um allein durch die Exzentrizität des Prüfteils bezüglich der Drehachse bedingte Auslenkungen des reflektierten Messlichtstrahls zu bestimmen,
- für die Folge theoretisch äquidistanter Drehwinkelpositionen $\Phi_i$ jeweils die exzentrizitätsbedingten Winkelverschiebungen $d\phi_{e,i}$ bestimmt und zu den theoretisch äquidistanten Drehwinkelstellungen $\Phi_i$ addiert werden,
- die Messwerte zu den theoretisch äquidistanten Drehwinkelstellungen $\Phi_i$ den korrigierten Drehwinkelstellungen $(\Phi_i + d\phi_{e,i})$ zugeordnet werden,
- Interpolationswerte der derart korrigierten Messkurve auf einem tatsächlich äquidistanten Drehwinkelraster bestimmt werden,
- eine Fourieranalyse der Interpolationswertekurve vorgenommen wird, die unmittelbar die dominante Welligkeit anzeigt, und/oder eine Hochpassfilterung der Interpolationswertekurve vorgenommen wird, die die um die Exzentrizität bereinigte Formabweichung des Prüfteils anzeigt.

**2.** Verfahren nach Anspruch 1, **dadurch gekennzeichnet, dass** der Messlichtstrahl bei gleichförmiger Rotation des Prüfteils über mindestens zwei vollständige Umdrehungen detektiert wird und vor der Tiefpassfilterung eine Autokorrelationsanalyse der Signale des positionsempfindlichen Empfängers zwecks Zuordnung der Anzahl der Messpunkte zu einem definierten Umfangsbereich des Prüfteils vorgenommen wird.

**3.** Verfahren nach Anspruch 1, **dadurch gekennzeichnet, dass** der Messlichtstrahl bei gleichförmiger Rotation des Prüfteils über mindestens zwei vollständige Umdrehungen von einem PSD als positionsempfindlichern Empfänger detektiert wird, für jeden Oberflächenbereich des Prüfteils positonsbezogen jeweils das Summen- als auch das Differenzsignal des PSD aufgezeichnet und gespeichert wird und vor der Tiefpassfilterung eine Autokorrelationsanalyse der Signale des positionsempfindlichen Empfängers zwecks Zuordnung der Anzahl der Messpunkte zu einem definierten Umfangsbereich des Prüfteils sowie eine Normierung der Signale durch Quotientenbildung aus Differenzsignal/Summensignal vorgenommen wird.

**4.** Verfahren nach einem der Ansprüche 1 bis 3, **dadurch gekennzeichnet, dass** die Drehung des Prüfteils um äquidistant vorgebbare Winkelschritte erfolgt.

**5.** Verfahren nach einem der Ansprüche 1 bis 4, **dadurch gekennzeichnet, dass** mittels eines Computerprogramms eine quantitative Bestimmung der Profilhöhen $z_n$ vorgenommen wird gemäß

$$z_n = \sum_{j=1}^{n} \tan(d\phi_j) \cdot \pi \cdot D / N ,$$

mit D, als dem Prüfteildurchmesser im Messumfangsbereich und N als der Anzahl der Winkelschritte pro Umdrehung und $d\phi_j$ als dem um den Einfluss der Exzentrizität bereinigten Profilneigungswert $\phi_j$ an der Stelle j.

6. Vorrichtung zur Durchführung des Verfahrens nach Anspruch 1, bestehend aus einer Lichtquelle (1), die einen Messlichtstrahl (3) mit Hilfe einer Optik (2) auf eine in Drehbewegungen versetzbare rotationssymmetrische Prüfteiloberfläche (5) senkrecht zur Rotationsachse (P) und in einem Winkel zur idealen Oberflächennormalen ($\bar{n}_0$) fokussiert, **dadurch gekennzeichnet, dass** vor der Prüfteiloberfläche (5), um die Auftreffpositionen des reflektierten Messlichtstrahls (6) auf einem positionsempfindlichen Empfänger (7) in jeweiliger Zuordnung zu einer Folge theoretisch äquidistanter Drehwinkelpositionen $\Phi_i$ des Prüfteils zumindest über eine vollständige Umdrehung des Prüfteils zu registrieren, ein Prisma (4) verwendet wird, welches derart in den Lichtstrahlengang verschiebbar positioniert ist, dass der einfallende Messlichtstrahl (3) als auch der von der Prüfteiloberfläche (5) reflektierte Messlichtstrahl (6) vom Prisma erfasst und der reflektierte Messlichtstrahl (6) auf einen gegenüber der dritten Prismenfläche (43) angeordneten positionsempfindlichen Empfänger (7) gelenkt wird, dessen Ausgangssignale eine Messdatenerfassungseinheit (8), die die Messwerte verstärkt, digitalisiert und speichert, erfasst und an eine Auswerteeinheit (9) weiterleitet, welche durch Tiefpassfilterung allein durch die Exzentrizität des Prüfteils bezüglich der Drehachse bedingte Auslenkungen des reflektierten Messlichtstrahls und durch Interpolation drehwinkelkorrigierte Werte bestimmt.

7. Vorrichtung nach Anspruch 6, **dadurch gekennzeichnet, dass** der positionsempfindliche Empfänger (7) direkt auf der Prismenfläche angeordnet ist, auf die der reflektierte Messlichtstrahl (6) gelangt.

8. Vorrichtung nach Anspruch 7, **dadurch gekennzeichnet, dass** die laterale Ausdehnung des positionsempfindlichen Empfängers (7) höchstens gleich, bevorzugt kleiner als die laterale Ausdehnung der Prismenfläche, auf der er aufliegt, festgelegt ist.

9. Vorrichtung nach Anspruch 6, **dadurch gekennzeichnet, dass** als positionsempfindlicher Empfänger (7) ein PSD eingesetzt ist, dessen Summen- als auch Differenzsignal für jeden Oberflächenbereich des Prüfteils an die anschließende Messdatenerfassungseinheit (8) weitergeleitet und dort getrennt gespeichert wird.

**Claims**

1. Method for determining deviations in shape and/or waviness of rotationally symmetrical test parts, wherein

- the part to be tested will be rotated about its axis of symmetry,
- a measuring light beam impinges upon the circumference of the test part from a preselectable direction in a plane at right angles to the axis of rotation,
- the positions of incidence of the reflected measuring light beam on a position sensitive detector will be recorded and stored in respective correlation to a sequence of theoretically equidistant angle of rotation positions $\Phi_i$ of the test part at least for one complete rotation of the same,
- subsequently the measuring curve such obtained is subjected to a low pass filtering thus to determine the deviations of the reflected measuring light beam only caused by the eccentricity of the test part relative to the axis of rotation,
- the respective angular displacements $d\phi_{e,i}$ due to eccentricity will be determined for the sequence of the theoretically equidistant angle of rotation positions $\Phi_i$ and will be added to the theoretically equidistant angle of rotation positions $\Phi_i$,
- the measuring values of the theoretically equidistant angle of rotation positions $\Phi_i$ are correlated to the corrected angle of rotation positions $\Phi_i + d\phi_{e,i}$),
- the interpolation values of the measuring curve obtained in this manner will be determined on a proper equidistant angle of rotation array,
- the curve of the interpolation values is subjected to a Fourier analysis which immediately shows the dominant waviness, and/or wherein a high pass filtering of the interpolation value curve is carried out which shows the deviation shape of the test part with the eccentricity removed.

2. Method according to claim 1, **characterized in that** the measuring light beam at a uniform rotation of the test part will be detected for at least two complete rotations, and an auto-correlation analysis of the signals of the position sensitive detectors is carried out before the low-pass filtering in order to correlate the number of measuring points to a defined range of the circumference of the test part.

3. Method according to claim 1, **characterized in that** the measuring light beam at a uniform rotation of the test part will be detected for at least two complete rotations of the same by use of a PSD employed as a position sensitive detector, **in that** the sum signal as well as the differential signal of the PSD will, in dependence on position, be recorded and stored for each surface range of the test part, and **in that** prior to the low-pass filtering, an auto-correlation analysis of the signals from the position sensitive detector is carried out for correlating the number of measuring points to a defined circumference range of the test part, as well as a calibration of the signals by virtue of forming the quotient from the difference signal/sum signal.

4. Method as claimed in one of the preceding claims 1 to 3, **characterized in that** the rotation of the test part is carried out in angular steps which are equidistantly preselectable.

5. Method as claimed in one of the preceding claims 1 to 4, **characterized in that** by virtue of a computer program a quantitative determination of the profile heights $z_n$ is carried out according to

$$z_n = \sum_{j=1}^{n} \tan(d\phi_j) \cdot \pi \cdot D / N$$

wherein D is the diameter of the test part in the circumferential measuring range,
and N the number of angular steps per rotation, and $d\phi_j$ the deviation in shape value $\phi_j$ at the position j, however with the influence of the eccentricity removed.

6. Device for carrying out the method according to claim 1, comprising a light source (1), which by means of an optical system (2) focuses a measuring light beam (3) upon a rotation symmetrical test part surface (5), adapted for rotation, at right angles to the axis of rotation (P) and at an angle to an ideal surface normal ( $\overline{n}_0$ ), **characterized in that**, in front of the test part surface (5) a prism (4) is employed to register the positions of impingement of the reflected measuring beam (6) on a position sensitive detector (7) in respective correlation to a sequence of theoretically equidistant rotation angular positions $\phi_i$ of the test part at least via one complete rotation of the test part, said prism (4) is displaceably positioned in the path of the light beam such that the incident measuring light beam (3) as well as the measuring light beam (6) reflected at the test part surface (5) are captured by the prism and the reflected measuring light beam (6) is directed upon the position sensitive detector (7) arranged opposite to the third prism face (43), the output signals from said position sensitive detector (7) are directed into a measuring data acquisition unit (8) which amplifies, digitizes and stores the measuring data and feeds the same into an evaluation unit (9) which determines, by means of low-pass filtering and by interpolation of rotational angle corrected values, the deflection of the reflected measuring light beam only caused by the eccentricity of the test part relative to the axis of rotation.

7. Device as claimed in claim 6, **characterized in that** the position sensitive detector (7) is directly arranged on that prism face upon which the reflected measuring light beam arrives.

8. Device as claimed in claim 7, **characterized in that** the lateral extension of the position sensitive detector (7) is designed at most equal to, preferably smaller than the lateral extension of that prism face upon which it positioned.

9. Device as claimed in claim 6, **characterized in that** a PSD is used as position sensitive detector 7, whose sum signal as well as the difference signal for each surface range of the test part will be fed into the subsequent measuring data acquisition unit (8) and separately stored in the latter.

**Revendications**

1. Procédé de détermination d'écarts de forme et/ou d'ondulations détectés sur les pièces à tester à symétrie de rotation, comprenant les opérations suivante :

   - tourner la pièce à tester autour de l'axe de symétrie,
   - diriger sur un plan perpendiculaire par rapport à l'axe de rotation un faisceau de lumière sur la circonférence de la pièce à tester,
   - enregistrer et sauvegarder les positions d'impact du faisceau de mesure réfléchi sur un récepteur sensible à la position en les attribuant de manière conforme à une séquence de positions théoriquement équidistantes d'angles de rotation $\Phi_i$ de la pièce à tester, pendant au moins une révolution complète de la pièce à tester,
   - ensuite procéder à un filtrage passe-bas de la courbe de mesure ainsi obtenue pour pouvoir déterminer les déviations du faisceau de lumière réfléchi, qui sont dues uniquement à l'excentricité de la pièce à tester par rapport à l'axe d'angle,
   - déterminer pour la séquence de positions d'angles de rotation théoriquement équidistantes $\Phi_i$ les décalages d'angle dus à l'excentricité $d\phi_{e,i}$ et les additionner aux positions d'angle théoriquement équidistantes $\Phi_i$
   - attribuer les mesures des positions d'angle de rotation théoriquement équidistantes $\Phi_i$ aux positions d'angle de rotation corrigées $(\Phi_i, + d\phi_{e,i})$,
   - déteminer à l'aide d'une trame d'angles de rotations réellement équidistantes les valeurs d'interpolation de la courbe de mesures ainsi corrigée,
   - faire de la courbe des valeurs d'interpolation une analyse de Fourier qui représente directement l'ondulation dominante et /ou un filtrage passe-haut de la courbe des valeurs d'interpolation qui représente l'écart de la forme de la pièce à tester, épuré de l'excentricité.

2. Procédé selon la revendication 1 est **caractérisé en ce que** le faisceau lumineux de mesure est détecté pendant au moins deux rotations uniformes de la pièce à tester et que , avant de procéder au filtrage passe-haut, il faut faire une analyse d'auto-corrélation des signaux du récepteur sensible à la positions pour pouvoir attribuer la quantité des points de mesure à une zone définie de la circonférence de la pièce à tester.

3. Procédé selon la revendication 1 est **caractérisé en ce que** le faisceau lumineux de mesure est détecté pendant au moins deux rotations uniformes de la pièce à tester par un PSD comme récepteur sensible à la position, que pour chacune des zones surfaciques de la pièce sont enregistrés et sauvegardés en fonction de la position le signal sommaire ainsi que le signal d'écart du PSD - et que, avant le filtrage passe-bas, est effectuée une analyse d'auto-corrélation des signaux provenant des récepteurs sensibles à la position pour pouvoir attribuer le nombre des points de mesure à une zone définie de la circonférence de la pièce à tester et effectuer la normalisation des signaux par la formation du rapport signal d'écart/signal sommaire.

4. Procédé selon les revendication 1 à 3 est **caractérisé en ce que** la rotation de la pièce à tester s'effectue par intervalles d'angle équidistantes susceptibles d'être déterminés d'avance.

5. Procédé selon les revendications 1 à 4 est **caractérisé en ce que** la détermination quantitative des hauteurs du profil $z_n$ est effectuée moyennant un programme d'ordinateur selon

$$z_n = \sum_{j=1}^{n} \tan(d\phi_j) \cdot \pi \cdot D / N,$$

avec D représentant le diamètre de la pièce à tester dans l'étendue de mesure et N traduisant le nombre d'intervalles angulaires par rotation et $d\phi_i$ comme valeur d'inclinaison de profil épurée de l'influence de l'excentricité à la position j.

6. Dispositif destiné à effectuer le procédé selon la revendication 1 comprenant une source lumineuse (1) focalisant à l'aide d'un dispositif optique (2) de manière perpendiculaire par rapport à l'axe de rotation (P) et de manière angulaire par rapport à la normale idéale de surface ($\bar{n}_0$) un faisceau lumineux de mesure (3) sur la surface d'une pièce de mesure (5) rotationellement symétrique, qui peut être mise en rotation, est **caractérisé en ce que** dans l'objectif de pouvoir enregistrer au moins durant une rotation complète de la pièce à tester, les positions d'impact du faisceau lumineux (6) de mesure réfléchi, sur un récepteur sensible à la position (7) avec l'attribution à une séquence de positions de rotation angulaire théoriquement équidistantes $\Phi_i$ de la pièce à tester, est placé devant la surface de la pièce à tester un prisme (4) positionné de manière susceptible d'être déplacé dans le trajectoire du faisceau lumineux de manière que le faisceau lumineux de mesure (3) arrivant de même que le faisceau lumineux de mesure (6) réfléchi par la surface de la pièce à tester soient saisis par le prisme et le faisceau lumineux réfléchi de mesure (6) soit dirigé sur un récepteur sensible de position (7) situé en face de la troisième face du prisme (43), dont les signaux de sortie sont saisis par une unité de saisie des valeurs mesurées (8) renforcent, numérisant et sauvegardant les valeurs mesurées, et transmis à une unité d'évaluation (9) qui à l'aide du filtrage de passe-bas, détermine les valeurs des déviations du faisceau lumineuse de mesure réfléchi, dues exclusivement à l'excentricité de la pièce à tester par rapport à l'axe de rotation, et détermine par interpolation les valeurs corrigées de l'angle de rotation

7. Dispositif selon la revendication 6, est **caractérisé en ce que** le récepteur sensible à la position (7) est disposé directement sur la surface du prisme sur laquelle le faisceau lumineux de mesure (6) est dirigé.

8. Dispositif selon la revendication 7 est **caractérisé en ce que** l'extension latérale du récepteur (7) sensible à la position, doit être fixée au maximum à la valeur égale, mais de préférence à une valeur inférieure à l'extension latérale de la surface du prisme sur laquelle il s'appui.

9. Dispositif selon la revendication 6 est **caractérisé en ce que** le récepteur sensible à la position (7) est un PSD dont aussi bien le signal sommaire que le signal d'écart pour la zone de la surface de la pièce à tester sont transmis à l'unité de saisie des valeurs mesurées (8) qui les sauvegarde séparément.

Fig. 1

Fig. 2

Fig. 3

Profilfunktion

Fig. 4a

Messsignal dΘ$_r$ bei exzentrischer Rotation

Fig. 4b    Rotationswinkel Φ in °

Fourieranalyse unkorrigiertes Messsignal

Fig. 4c

Fourieranalyse korrigiertes Messsignal

Fig. 4d

EP 2 002 204 B1

Fig. 5

Fig. 6

Fig. 7

Fig. 8

Fig. 9

Fig. 10

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 4373804 A
- US 20020145740 A
- EP 0271646 B1
- US 4731934 A
- US 5926781 A
- DE 3503858 A1

- DE 202004009727 U1
- US 4859062 A
- JP 57161610 A
- US 4596460 A
- EP 0628787 A2
- DE 4434822 C1

### In der Beschreibung aufgeführte Nicht-Patentliteratur

- **W. Gao ; S. Kiyono ; T. Sugawara.** High-accurracy oundness measurement by new error separation method. *Prec. Eng.,* 1997, vol. 21, 123-133